# EUROPEAN PATENT APPLICATION

(11) **EP 4 832 471 A1**
(43) Date of publication of application: **28.10.2026**
(21) Application number: 26174369.4
(22) Date of filing: 24.04.2026
(51) Int. Cl.: H04N 1/00

(54) **IMAGE FORMING APPARATUS AND IMAGE FORMING APPARATUS CONTROL METHOD**

(30) Priority: 25.04.2025 JP 2025073084
(71) Applicant: KYOCERA Document Solutions Inc., Osaka-shi, Osaka 540-8585 (JP)
(72) Inventor: Matsuki, Yoshitaka, Osaka-shi, 540-8585 (JP); Sone, Masaki, Osaka-shi, 540-8585 (JP); Sakabe, Keiji, Osaka-shi, 540-8585 (JP)
(74) Representative: Plougmann Vingtoft a/s

(57) **Abstract**

An image forming apparatus includes a reception processing portion and an activation processing portion. The reception processing portion is capable of receiving a selection operation for selecting one or more functions from among a plurality of available functions provided in the main body. When the reception processing portion receives a selection operation, the activation processing portion activates one or more specific functions among the plurality of functions based on the selection operation, and deactivates the remaining functions.

## Description

### INCORPORATION BY REFERENCE

This application is based upon and claims the benefit of priority from the corresponding Japanese Patent Application No. 2025-073084 filed on April 25, 2025 the entire contents of which are incorporated herein by reference.

The present disclosure relates to an image forming apparatus and an image forming apparatus control method.

### BACKGROUND

An image forming apparatus capable of performing secure printing is known as a related technology. Secure printing is a type of printing that requires input of authentication information when printing starts.

### SUMMARY

An image forming apparatus according to one aspect of the present disclosure includes a reception processing portion and an activation processing portion. The reception processing portion is capable of receiving a selection operation for selecting one or more functions from a plurality of available functions provided in a main body. When the reception processing portion receives the selection operation, the activation processing portion activates one or more specific functions of the plurality of functions based on the selection operation, and deactivates the remaining functions.

An image forming apparatus control method according to another aspect of the present disclosure includes receiving a selection operation for selecting one or more functions from a plurality of available functions provided in a main body of the image forming apparatus. The image forming apparatus control method includes, when the selection operation is received, activating one or more specific functions of the plurality of functions based on the selection operation and deactivating the remaining functions.

This Summary is provided to introduce a selection of concepts in a simplified form that are further described below in the Detailed Description with reference where appropriate to the accompanying drawings. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 is a schematic block diagram showing a configuration of an image forming apparatus according to an embodiment.
FIG. 2 is a schematic diagram showing an external appearance of an image forming apparatus according to an embodiment.
FIG. 3 is a flowchart showing a first operation example of an image forming apparatus according to an embodiment.
FIG. 4 is a schematic diagram showing an example of a first selection screen of a first operation example of an image forming apparatus according to an embodiment.
FIG. 5 is a schematic diagram showing an example of a second selection screen of a first operation example of an image forming apparatus according to an embodiment.
FIG. 6 is a schematic diagram showing an example of a third selection screen of a first operation example of an image forming apparatus according to an embodiment.
FIG. 7 is a schematic diagram showing an example of a fourth selection screen of a first operation example of an image forming apparatus according to an embodiment.
FIG. 8 is a flowchart showing a second operation example of an image forming apparatus according to an embodiment.
FIG. 9 is a schematic diagram showing an example of a fifth selection screen of a second operation example of an image forming apparatus according to an embodiment.
FIG. 10 is a flowchart showing a third operation example of an image forming apparatus according to an embodiment.

### DETAILED DESCRIPTION

Hereinafter, embodiments according to the present disclosure will be described with reference to the drawings. The following embodiments are examples of specific embodiments according the present disclosure, and do not limit the technical scope of the present disclosure.

### [1] Overall Configuration of Image Forming Apparatus

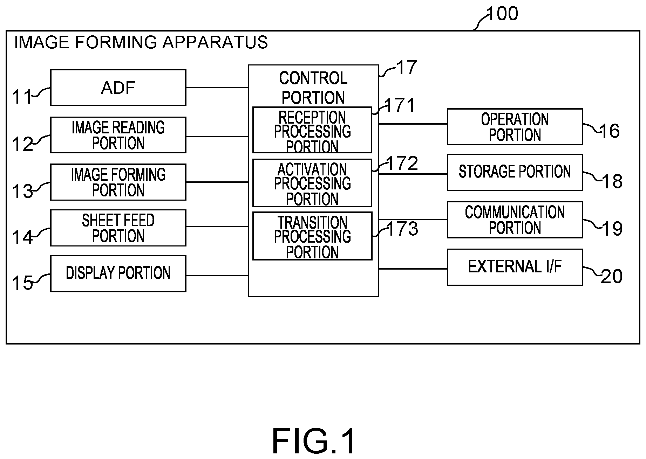

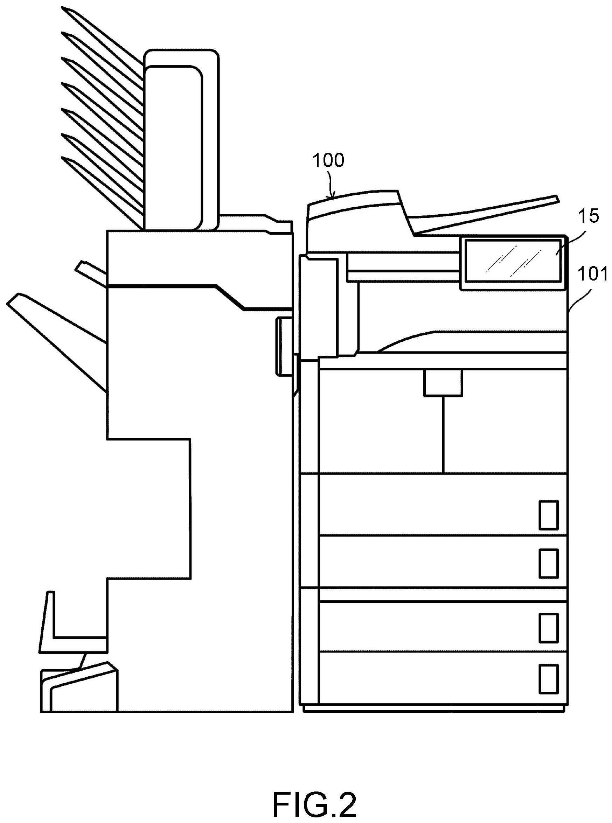

First, an overall configuration of an image forming apparatus 100 according to the present embodiment will be described with reference to FIGS. 1 and 2.

The image forming apparatus 100 according to the present embodiment is, as an example, a multifunction peripheral having multiple functions such as a scanning function for acquiring image data from a document, a printing function for forming an image based on image data, a facsimile function, and a copy function. The image forming apparatus 100 may be a printer, a scanner, a facsimile machine, a copier, or the like, as long as the image forming apparatus 100 has an image processing function including at least one of a function for forming an image and a function for acquiring image data.

As shown in FIG. 1, the image forming apparatus 100 includes an automatic document conveying device 11, an image reading portion 12, an image forming portion 13, a sheet feed portion 14, a display portion 15, an operation portion 16, a control portion 17, a storage portion 18, a communication portion 19, and an external interface 20. The automatic document conveying device 11 is an auto document feeder (ADF), and is therefore written as "ADF" in FIG. 1, and will also be referred to as "ADF 11" in the following description. In addition, the external interface 20 is an external I/F (interface), and is therefore written as "external I/F" in FIG. 1, and will also be referred to as "external I/F 20" in the following description.

In the present embodiment, as shown in FIG. 2, the image forming apparatus 100 includes a main body 101. The ADF 11, the image reading portion 12, the image forming portion 13, the sheet feed portion 14, the display portion 15, the operation portion 16, the control portion 17, the storage portion 18, the communication portion 19, and the external I/F 20 are all provided in the main body 101.

The ADF 11 conveys a document whose image is to be read by the image reading portion 12. The ADF 11 includes a document setting portion, a plurality of conveying rollers, a document holder, a sheet discharge portion, and the like.

The image reading portion 12 reads an image from a document and outputs image data corresponding to the read image. The image reading portion 12 includes a document table, a light source, a plurality of mirrors, an optical lens, a charge coupled device (CCD), and the like.

The image forming portion 13 forms an image on a sheet by an electrophotographic method based on the image data output from the image reading portion 12. In addition, the image forming portion 13 also forms an image on a sheet based on image data input from an information processing apparatus external to the image forming apparatus 100, such as a personal computer. The image forming portion 13 has four image forming units corresponding to the four colors of C (cyan), M (magenta), Y (yellow), and K (black), an optical scanning device, an intermediate transfer belt, a secondary transfer roller, a fixing device, and the like. The image forming portion 13 may be configured to form an image on a sheet by an image forming method other than the electrophotographic method, such as an inkjet method.

The image forming portion 13 forms an image on a sheet using toner as a developing agent. When the image forming portion 13 forms an image by an inkjet method, ink (another example of a developing agent) is supplied instead of toner. The toner supplied to the image forming portion 13 includes toner of multiple colors, for example, C (cyan), M (magenta), Y (yellow), and K (black). After image formation in the image forming portion 13, the sheet is discharged (supplied) to an extension device or the like for post-processing.

The sheet feed portion 14 supplies sheets to the image forming portion 13. The sheet feed portion 14 includes a sheet feed cassette, a manual feed tray, a sheet conveying path, a plurality of conveying rollers, and the like. The image forming portion 13 forms an image on a sheet supplied from the sheet feed portion 14. The sheet supplied to the image forming portion 13 is paper as an example, but is not limited to paper and may be, for example, a resin film or the like.

The display portion 15 is a user interface in the image forming apparatus 100 for presenting (displaying) information to the user. The display portion 15 displays various types of information in response to control instructions from the control portion 17. In the present embodiment, as an example, the display portion 15 includes a liquid crystal display, and displays a display screen including various information on the liquid crystal display.

The operation portion 16 is, for example, a user interface for receiving user operations on a display screen displayed on the display portion 15. The operation portion 16 receives various types of operations from the user by, for example, outputting an electrical signal in response to the user's operation. In the present embodiment, as an example, the operation portion 16 includes switches, keys or a numeric keypad, a touch panel, and the like.

In addition, the image forming apparatus 100 may, for example, include as a user interface, an audio output portion, an audio input portion, or the like in addition to or instead of the display portion 15 and the operation portion 16.

The control portion 17 is mainly composed of a computer system having one or more processors and one or more memories, and controls the image forming apparatus 100 in an integrated manner. In the image forming apparatus 100, the functions of the control portion 17 are achieved by one or more processors executing programs. In the present embodiment, as an example, the control portion 17 includes a central processing unit (CPU).

The program may be pre-recorded in one or more memories, may be provided via a telecommunications line such as the Internet, or may be provided recorded on a non-transitory recording medium, such as a memory card or an optical disk, readable by a computer system. One or more processors are composed of one or more electronic circuits, including semiconductor integrated circuits. Additionally, the term computer system as used herein includes a microcontroller having one or more processors and one or more memories. The control portion 17 may be a control portion provided separately from a main control portion that performs overall control of the image forming apparatus 100.

The storage unit 18 stores in advance information such as control programs for causing the control portion 17 to execute various types of processes. In the present embodiment, the storage portion 18 includes one or more non-volatile memories such as a read only memory (ROM), a hard disk (HDD), or a solid state disk (SSD). In addition, the storage portion 18 also includes one or more volatile memories such as a random access memory (RAM).

The communication portion 19 is an interface that executes data communication between the image forming apparatus 100 and an external system connected via a communication network such as the Internet or a LAN (Local Area Network). The data communication may be wired communication or wireless communication. In addition, the data communication may be wireless communication in accordance with a short-range wireless communication standard such as Near Field Communication (NFC) (registered trademark) or Bluetooth (registered trademark).

The external I/F 20 has a port to which an external memory or an external device is connected, and is an interface that executes data communication with the external memory or the external device connected to the port. In the present embodiment, the external memory includes, for example, a Universal Serial Bus (USB) memory. In addition, the external device also includes, for example, a USB mass storage compatible device.

An image forming apparatus capable of executing secure printing is known as a related technology. Secure printing is a type of printing that requires input of authentication information when printing starts.

In the image forming apparatus shown in the related art, various functions of the image forming apparatus, such as the secure print function, may be set in advance. In this case, there is a problem that the user has to change the settings of various functions because functions that the user does not need are set or functions that the user needs are not set, which makes setting various functions time-consuming.

In contrast, in the present embodiment, the processing executed by the control portion 17 of the image forming apparatus 100 described below makes it possible to achieve an image forming apparatus 100 and a control method for the image forming apparatus 100 that can reduce the effort required for software updates.

### [2] Configuration of the Control Portion

Hereinafter, each functional portion included in the control portion 17 will be described in more detail with reference to FIG. 1. The control portion 17 includes a reception processing portion 171, an activation processing portion 172, and a transition processing portion 173. That is, the image forming apparatus 100 includes a reception processing portion 171, an activation processing portion 172, and a transition processing portion 173 as functions of the control portion 17.

The reception processing portion 171 is capable of receiving a selection operation for selecting one or more functions from among a plurality of available functions provided in the main body 101. Here, the plurality of functions refers to, for example, a plurality of functions that are provided in the main body 101 of the image forming apparatus 100 at the time of shipment, and all of which are available to the user.

More specifically, the plurality of functions include functions related to an external I/F 20 such as a USB device. In addition, the plurality of functions also include network protocols, such as line printer daemon protocol (LPD) or RAW Port, for the image forming apparatus 100 to receive printing (image formation) jobs sent from external devices. Moreover, the functions also include a network protocol for transmitting and receiving data between an external device and the image forming apparatus 100, such as file transfer protocol (FTP) or Internet printing protocol (IPP). Further, the plurality of functions also include a protocol such as file transfer protocol over SSL/TLS (FTPS) that encrypts data sent and received via FTP using secure sockets layer (SSL) or transport layer security (TLS). Similarly, the plurality of functions include a protocol such as Internet printing protocol over SSL/TLS (IPPS) that encrypts data sent and received via IPP using SSL or TLS.

Here, of the above-mentioned functions, both FTPS and IPPS are secure functions for which security is ensured. In other words, FTPS and IPPS are functions for which security settings are made in advance. That is, in the present embodiment, the plurality of functions include functions for which security settings have been made in advance. On the other hand, USB Device, LPD, RAW Port, FTP, and IPP are all insecure functions with no security guaranteed. In other words, these functions are functions for which no security settings have been made in advance. That is, in the present embodiment, the plurality of functions include functions for which security settings have not been made in advance.

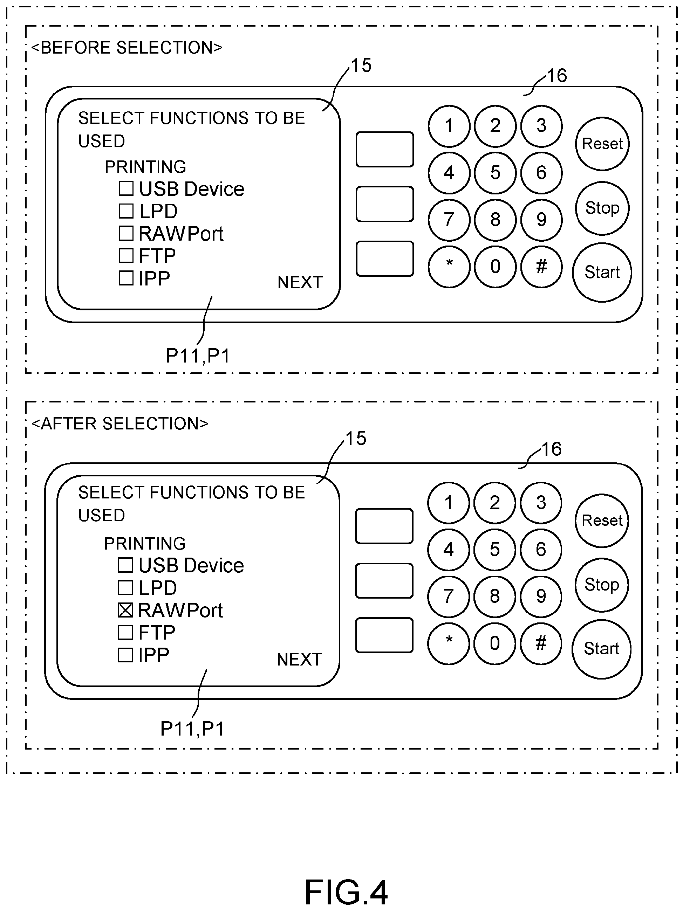

More specifically, the reception processing portion 171 displays on the display portion 15 a selection screen P1 (see FIG. 4, etc.) for allowing the user to select one or more functions from a plurality of functions. The user performs a selection operation to select one or more functions from the plurality of functions displayed on the selection screen P1. Thus, the reception processing portion 171 receives a selection operation by the user via the operation portion 16.

Note that not all of the functions provided in the main body 101 of the image forming apparatus 100 need be displayed on the selection screen P1. For example, only some of all the functions described above may be displayed on the selection screen P1. In this case, the user does not select one or more functions from all of the above functions, but performs a selection operation to select one or more functions from a portion of the functions.

In the present embodiment, the reception processing portion 171 is capable of receiving a selection operation at a specific timing when the user starts using the main body 101. Here, the specific timing may include, for example, timing when the image forming apparatus 100 is turned ON for the first time after the image forming apparatus 100 is shipped. In addition, the specific timing may include, for example, timing when a specific system equipped in the image forming apparatus 100 is started for the first time after the image forming apparatus 100 is shipped, or timing when the operation portion 16 receives an operation by a user for the first time. Moreover, the specific timing may also include, for example, timing when the image forming apparatus 100 is connected to the network for the first time after shipping of the image forming apparatus 100, or timing when settings of the image forming apparatus 100 are changed for the first time. Further, the specific timing may also include, for example, timing when the image forming apparatus 100 executes a job for the first time after the image forming apparatus 100 is shipped. In the present embodiment, the specific timing is, for example, timing when the image forming apparatus 100 is turned ON for the first time after the image forming apparatus 100 is shipped.

Note that the reception processing portion 171 may inquire of the user at a specific timing whether to activate or deactivate each function by the activation processing portion 172, which will be described later. The reception processing portion 171 may receive the selection operation by displaying the selection screen P1 on the display portion 15 after obtaining user approval.

In addition, the reception processing portion 171 is basically able to receive a selection operation only at a specific timing the first time after the image forming apparatus 100 is shipped; however, is not limited to this. For example, even after the activation processing portion 172 described later has activated or deactivated each function, in a case in which the operation portion 16 receives a change operation by the user to change the above settings, the reception processing portion 171 may be able to receive the selection operation again.

When the reception processing portion 171 receives a selection operation, the activation processing portion 172 activates one or more specific functions among the plurality of functions based on the selection operation, and deactivates the remaining functions. Here, "activating one or more specific functions" means that after the selection operation is received, the one or more specific functions are made available to the user when using the image forming apparatus 100. On the other hand, "deactivate remaining functions" means that the remaining functions cannot be used by the user when using image forming apparatus 100 after the selection operation has been received. Thus, the user is able to easily activate only the functions that the user wants to use and deactivate functions that are not required by the user, thereby reducing the effort required for setting functions.

More specifically, for example, it is presumed that the user performs a selection operation to select one or more functions from among a plurality of functions. In this case, the activation processing portion 172 may activate the selected one or more functions as one or more specific functions, and deactivate the remaining functions. Thus, the user is able to select one or more functions that the user wants to use, thereby activating the one or more functions and deactivating the remaining functions.

In addition, the activation processing portion 172 may activate functions other than the selected one or more functions from the plurality of functions as one or more specific functions, and deactivate the remaining functions. Thus, the user is able to select one or more functions that the user does not want to use, thereby deactivating the one or more functions and activating the remaining functions.

The advantages of the image forming apparatus 100 according to the present embodiment will be specifically described below. As an example, it is presumed that an image forming apparatus is initially configured to satisfy secure-by-default requirements at the time of shipment. Here, secure-by default means that sufficient security measures are implemented for software or hardware even in initial settings, and the software or hardware can ensure a relatively high level of safety. The secure-by-default requirement is mandated by, for example, the UK's Product Security and Telecommunications Infrastructure Act (PSTI) or the European Radio Equipment Directive (RED). Here, it is presumed that the image forming apparatus is in a state where only secure functions such as FTPS or IPPS are available at the time of shipment.

In this case, the image forming apparatus is shipped in a state where unsecure functions such as USB Device or RAW Port cannot be used. Therefore, when the image forming apparatus is left in the initial setting state, the user cannot use the unsecure functions even if the user wants to.

Therefore, in the image forming apparatus 100 according to the present embodiment, when a user selects one or more functions as described above, one or more functions are activated as one or more specific functions based on the selected one or more functions, and the remaining functions are deactivated. Thus, unsecure functions that could not be used when the image forming apparatus 100 was left in the initial setting state can be made available by activating them as specific functions. In addition, this also allows selection of unsecure functions, so that unsecure functions are not activated more than necessary, making it easier to maintain the image forming apparatus 100 in a state where a relatively high level of security is ensured. Therefore, in the image forming apparatus 100 according to the present embodiment, by simply selecting one or more functions, it is possible to reduce the security risk of the image forming apparatus 100 and easily configure the settings to activate the functions that the user wants to use.

Before a user uses the image forming apparatus 100, for example, a maintenance technician of a service provider that provides various services for the image forming apparatus may perform a setting operation for the image forming apparatus 100. In such a case, when the image forming apparatus 100 is in an initial setting state that satisfies the secure-by-default requirements at the time of shipment, there is a problem in that the maintenance technician cannot perform the setting work.

More specifically, the maintenance technician may perform setting work related to a protocol for monitoring and controlling the status of devices connected to a network, such as simple network management protocol (SNMP). In addition, the maintenance technician may perform setting work related to files written in, for example, web services description language (WSDL) or the like. In such a case, when the image forming apparatus 100 is in the above-described initial setting state, the maintenance technician cannot perform the above-described setting work using the tools required for the setting work.

Therefore, in the present embodiment, in order to solve the above problem, the reception processing portion 171 is capable of receiving a specific operation different from a selection operation. The specific operation may be, for example, an operation of drawing a specific path on a touch panel provided in the operation portion 16, or an operation that combines multiple operations of switches, keys, numeric keys, or the like. Here, it is presumed that the specific operation is performed by a maintenance technician; however, the specific operation may also be performed by a user.

When the reception processing portion 171 receives a specific operation other than a selection operation, the transition processing portion 173 causes the mode of the main body 101 to transition from a normal mode to a setting mode that allows the settings of the main unit 101 to be changed. Here, the setting mode is a mode in which various settings of the image forming apparatus 100 can be made, and the setting work can be performed by a maintenance technician or a user. Thus, the maintenance technician or the user is able to temporarily perform the setting work even when the image forming apparatus 100 is in the above-described initial setting state.

In addition, after completing the above setting work, the maintenance technician or user performs a termination operation to end the setting mode. In a case in which the reception processing portion 171 receives the termination operation, the transition processing unit 173 causes the main body 101 to transition from the setting mode to the normal mode. Thus, the image forming apparatus 100 returns to the above-described initial setting state. Thus, the user is able to use the image forming apparatus 100 in the above-described initial setting state. Note that the transition processing portion 173 may return the main body 101 from the setting mode to the normal mode not only when a termination operation is received, but also, for example, when the power of the image forming apparatus 100 is switched from an OFF state to an ON state as a trigger. In this case, even in a case in which the maintenance technician or the user forgets to perform the termination operation, it is possible to return the main body 101 from the setting mode to the normal mode.

### [3] Example of Operation of Image Forming Apparatus

In the present embodiment, the image forming apparatus 100 can operate in one or more of the following first to third operation examples. The first to third operation examples listed below are examples of the operation of the image forming apparatus 100, and are not intended to limit the operation of image forming apparatus 100 to these operation examples.

### <First Operation Example>

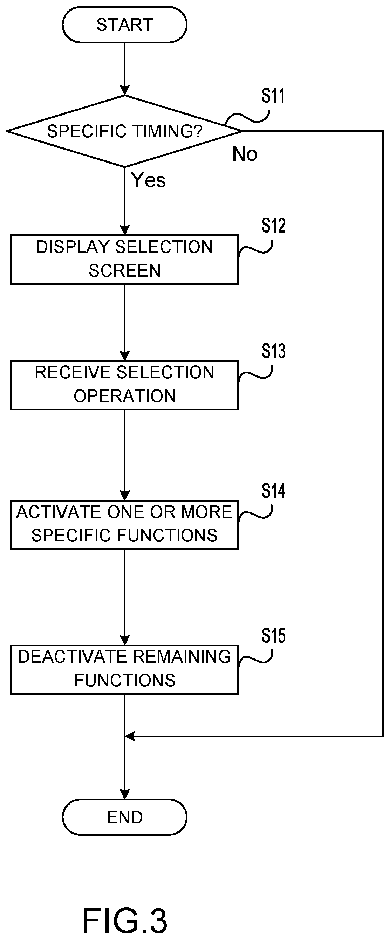

The first operation example will be described below with reference to FIGS. 3 to 7. Here, steps S11, S12, and so on represent numbers of processing procedures (steps) executed by the image forming apparatus 100. First, the flow of operations of the image forming apparatus 100 in a first operation example will be described with reference to FIG. 1.

### <Step S11>

First, the image forming apparatus 100 determines whether or not a specific timing has been reached. Here, the specific timing may include, for example, timing when the image forming apparatus 100 is turned ON for the first time after the image forming apparatus 100 is shipped. When it is determined that the specific timing has been reached (step S11: YES), the image forming apparatus 100 executes step S12. On the other hand, when it is determined that the specific timing has not been reached (step S11: NO), the image forming apparatus 100 waits until it determines that the specific timing has been reached (in this case, the power of the image forming apparatus 100 is maintained in an OFF state).

### <Step S12>

The reception processing portion 171 of the image forming apparatus 100 displays on the display portion 15 a selection screen P1 that allows the user to select one or more functions from a plurality of functions. FIG. 4 shows a first selection screen P11, which is an example of the selection screen P1 displayed on the display portion 15 in the first operation example. As shown in <Before Selection> in FIG. 4, the first selection screen P11 displays a message prompting the user to select one or more functions the user wants to use from a plurality of functions, as well as check boxes for selecting each function. Here, printing-related functions "USB Device," "LPD," "RAW Port," "FTP," and "IPP" are displayed as options. Thus, the user is able to know the available functions by looking at the first selection screen P11. Note that the functions displayed on the first selection screen P11 may not be all of the functions of the image forming apparatus 100, but may be some of the functions.

### <Step S13>

Returning to FIG. 3, the reception processing portion 171 then receives a selection operation by the user via the operation portion 16. More specifically, as shown in <After Selection> in FIG. 4, the user selects one or more functions that the user wants to use while viewing the plurality of functions displayed on the first selection screen P11. Here, the user performs a selection operation to select "RAW Port" by checking the checkbox for "RAW Port," which is a function the user wants to use.

### <Step S14>

Returning to FIG. 3, the activation processing portion 172 of the image forming apparatus 100 then activates one or more specific functions from among the plurality of functions based on the selection operation received by the reception processing portion 171. Here, the user performs a selection operation to select the functions the user wants to use, and the activation processing portion 172 activates the selected one or more functions as one or more specific functions. In the example shown in FIG. 4, the activation processing portion 172 activates only the "RAW Port" function.

### <Step S15>

Returning to FIG. 3, the activation processing portion 172 then deactivates the remaining functions from among the plurality of functions, excluding one or more specific functions. In the example shown in FIG. 4, the activation processing portion 172 deactivates the functions other than the "RAW Port" function. Note that functions that are not displayed on the first selection screen P11 are not deactivated but are activated.

Through the above-described series of processes, the user is able to easily activate only the functions that the user wants to use and deactivate functions that are not required by the user, thereby reducing the effort required for setting functions. In addition, functions that are not displayed on the selection screen P1 are activated regardless of the user's selection, and thus it is possible for the user to select and reject functions that the user wants to use while activating functions that are essential for the image forming apparatus 100 (for example, secure functions).

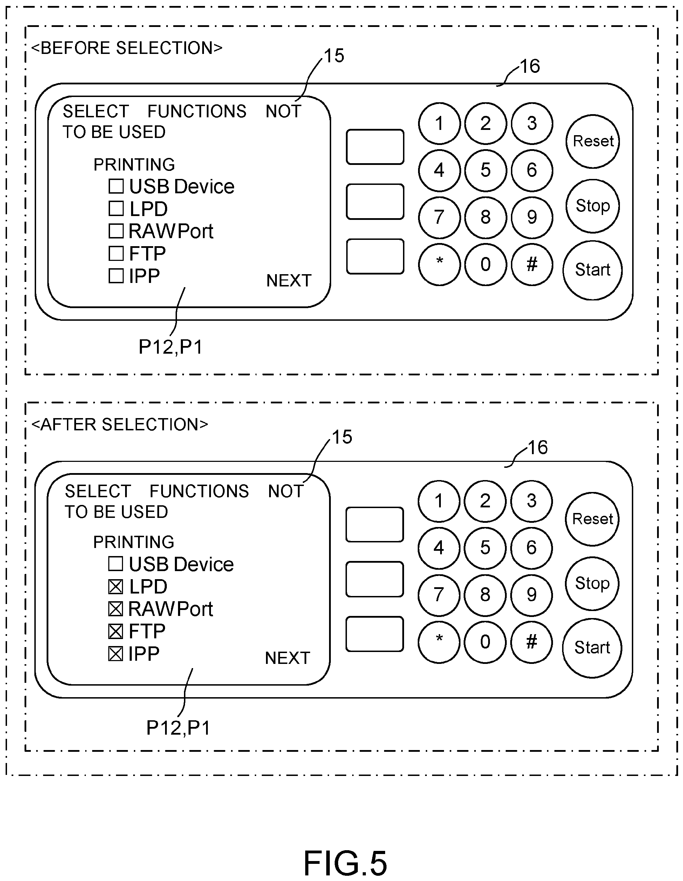

In the first operation example, the reception processing portion 171 may display the second selection screen P12 shown in FIG. 5 on the display portion 15 in place of the first selection screen P11 in step S12. As shown in <Before Selection> in FIG. 5, the second selection screen P12 displays a message prompting the user to select one or more functions that the user does not want to use from among a plurality of functions. Note that the second selection screen P12 is the same as the first selection screen P11 except for the message, so a description thereof will be omitted here. Also, note that the functions displayed on the second selection screen P12 may not be all of the functions of the image forming apparatus 100, but may be some of the functions.

In this case, as shown in <After Selection> in FIG. 5, the user selects one or more functions that will not be used while looking at the plurality of functions displayed on the second selection screen P12. Here, the user performs a selection operation to select the functions that the user will not use, "LPD," "RAW Port," "FTP," and "IPP," by checking the checkboxes for each of these. Thus, in step S13, the reception processing portion 171 receives, via the operation portion 16, a selection operation for selecting one or more functions that the user will not use.

In steps S14 and S15, the activation processing portion 172 activates the functions excluding the selected one or more functions as one or more specific functions based on the selection operation received by the reception processing portion 171, and deactivates the remaining functions. In the example shown in FIG. 5, the activation processing portion 172 activates only the functions of the unselected "USB Device" and deactivates functions other than the "USB Device." Note that functions that are not displayed on the second selection screen P12 are not deactivated but are activated.

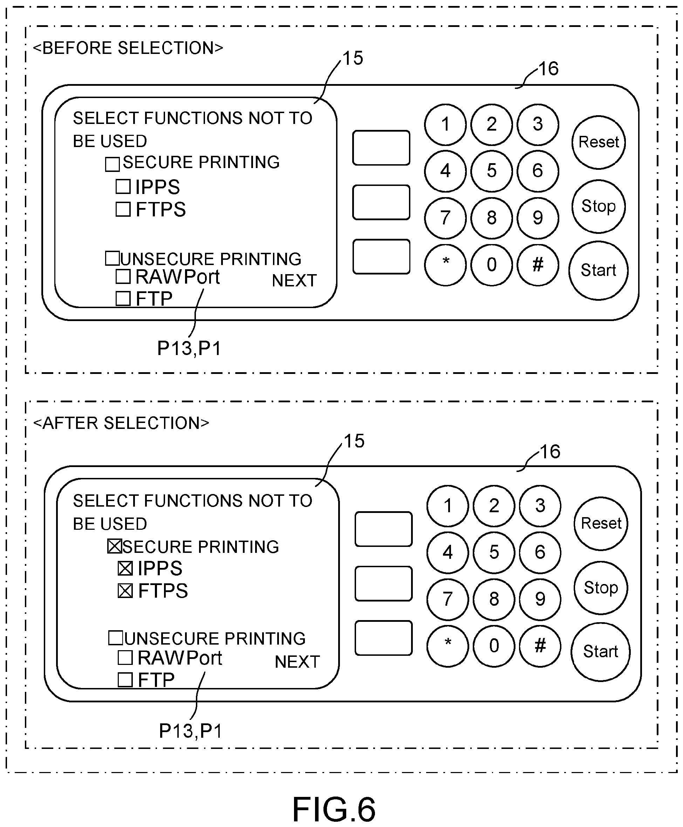

In the first operation example, the reception processing portion 171 may display a third selection screen P13 shown in FIG. 6 on the display portion 15 in place of the first selection screen P11 in step S12. As shown in <Before Selection> in FIG. 6, the third selection screen P13 displays a message prompting the user to select one or more functions the user wants to use from a plurality of functions, as well as check boxes for selecting each group. A group referred to here includes two or more functions of the same type. Here, the secure printing functions "IPPS" and "FTPS" are displayed in a group called "Secure Printing," and the unsecure printing functions "RAW Port" and "FTP" are displayed in a group called "Non-Secure Printing." Thus, the user is able to know the available functions for each group by looking at the third selection screen P13. Note that the functions displayed on the third selection screen P13 may not be all of the functions of the image forming apparatus 100, but may be some of the functions.

In this case, as shown in <After Selection> in FIG. 6, the user selects a group to use while looking at the plurality of functions displayed on the third selection screen P13. Here, the user performs a selection operation to select the group to be used by checking the checkbox for "Secure Printing." Thus, in step S13, the reception processing portion 171 receives, via the operation portion 16, a selection operation for selecting a group to be used by the user.

In steps S14 and S15, the activation processing portion 172 activates the selected group as one or more specific functions based on the selection operation received by the reception processing portion 171, and deactivates the remaining functions. In the example shown in FIG. 6, the activation processing portion 172 activates only the functions included in the selected "secure printing" group, and deactivates the functions included in the "unsecure printing" group. Note that functions that are not displayed on the second selection screen P13 are not deactivated but are activated.

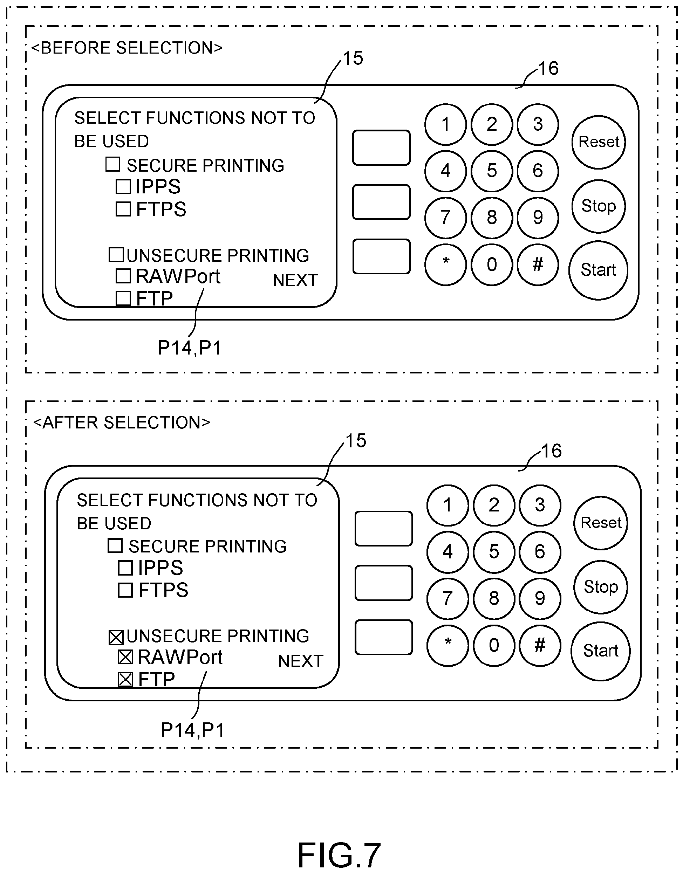

In addition, in the first operation example, the reception processing portion 171 may display a fourth selection screen P14 shown in FIG. 7 on the display portion 15 in place of the third selection screen P13 in step S12. As shown in <Before Selection> in FIG. 7, the fourth selection screen P14 displays a message prompting the user to select one or more functions that the user does not want to use from among a plurality of functions. Note that the fourth selection screen P14 is the same as the third selection screen P13 except for the message, so a description thereof will be omitted here. In addition, the functions displayed on the fourth selection screen P14 may not be all of the functions of the image forming apparatus 100, but may be some of the functions.

In this case, as shown in <After Selection> in FIG. 7, the user selects a group not to use while looking at the plurality of functions displayed on the fourth selection screen P14. Here, the user performs a selection operation of selecting the group "unsecure printing" by checking the checkbox for the group that will not be used. Thus, in step S13, the reception processing portion 171 receives, via the operation portion 16, a selection operation for selecting a group that the user will not use.

In steps S14 and S15, the activation processing portion 172 activates the groups excluding the selected group and deactivates the remaining groups based on the selection operation received by the reception processing portion 171. In the example shown in FIG. 7, the activation processing portion 172 will activate only the functions included in the unselected "secure printing" group and deactivate the functions included in the "unsecure printing" group. Note that functions that are not displayed on the fourth selection screen P14 are not deactivated but are activated.

Note that on the third selection screen P13 and the fourth selection screen P14, for groups that include unsecure functions such as "unsecure printing," selection may be received for each function from the perspective of maintaining the security of the image forming apparatus 100. That is, for the "unsecure printing" group, the reception process portion 171 may be able to receive only a selection operation for each function, without receiving a selection operation for each group.

### <Second Operation Example>

The second operation example differs from the first operation example in that a plurality of functions are classified into a first function group and a second function group. The first function group includes one or more unsecure functions that do not satisfy the secure-by-default requirement. The second function group includes one or more secure functions that are set so that each of the one or more functions classified in the first function group satisfies the secure-by-default requirement. In other words, the second function group is a group in which security settings have been made in advance for the first function group. Hereinafter, the first function group may be referred to as an "old model" and the second function group may be referred to as a "new model."

In the second operation example, when the reception processing portion 171 receives a selection operation to select either the first function group or the second function group, the activation processing portion 172 activates the selected group and deactivates the group that was not selected. That is, when the user selects the "new model," the activation processing portion 172 activates one or more secure functions classified as the "new model" and deactivates one or more unsecure functions classified as the "old model." On the other hand, when the user selects the "old model," the activation processing portion 172 activates one or more unsecure functions classified as the "old model" and deactivates one or more secure functions classified as the "new model." Thus, the user is able to choose whether to use the image forming apparatus 100 as an older model image forming apparatus that does not satisfy the secure-by-default requirements, or as a newer model image forming apparatus that satisfies the secure-by-default requirements.

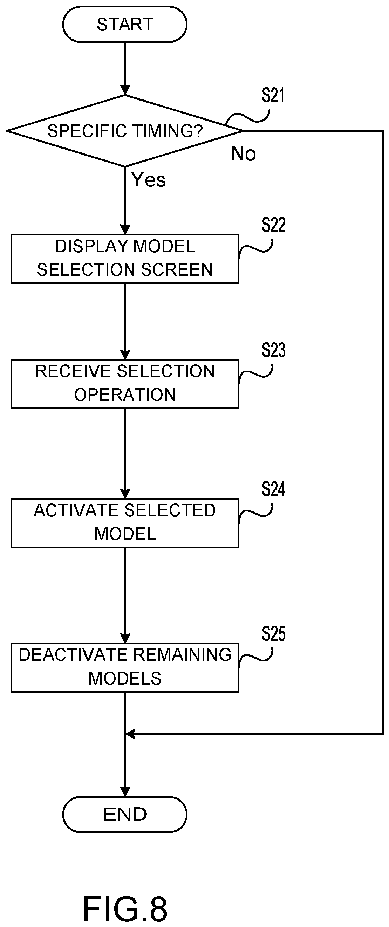

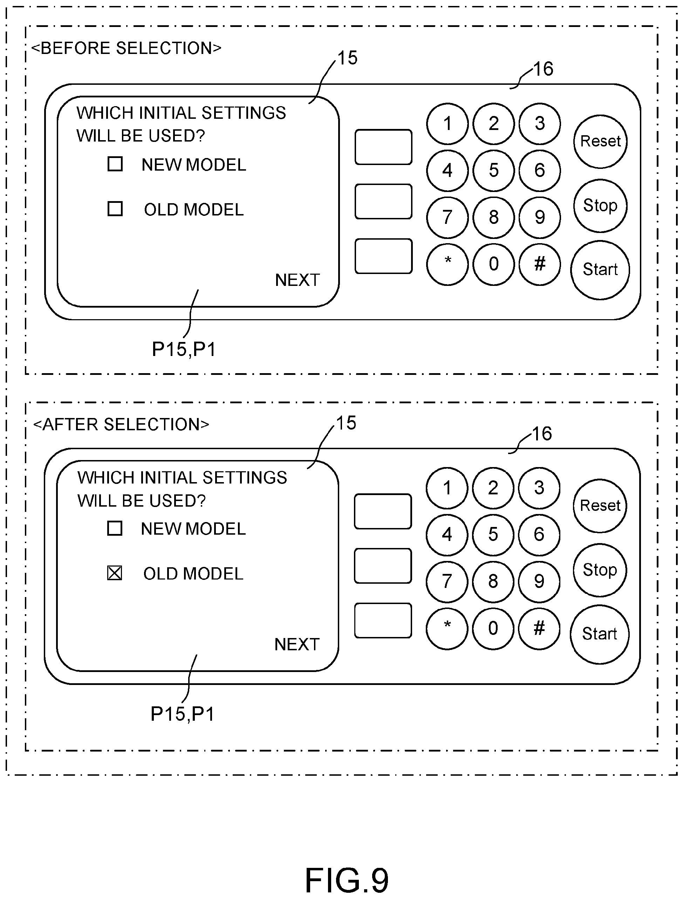

The second operation example will be described below with reference to FIGS. 8 and 9. Here, steps S21, S22, and so on shown in FIG. 8 represent numbers of processing procedures (steps) executed by the image forming apparatus 100. First, the flow of operations of the image forming apparatus 100 in a second operation example will be described with reference to FIG. 8.

### <Step S21>

First, the image forming apparatus 100 determines whether or not a specific timing has been reached. Here, the specific timing may include, for example, timing when the image forming apparatus 100 is turned ON for the first time after the image forming apparatus 100 is shipped. When it is determined that the specific timing has been reached (step S21: YES), the image forming apparatus 100 executes step S22. On the other hand, when it is determined that the specific timing has not been reached (step S21: NO), the image forming apparatus 100 waits until it determines that the specific timing has been reached (in this case, the power of the image forming apparatus 100 is maintained in an OFF state).

### <Step S22>

The reception processing portion 171 displays a selection screen P1 on the display portion 15 to allow the user to select either the first function group or the second function group. FIG. 9 shows a model selection screen P15, which is an example of the selection screen P1 displayed on the display portion 15 in the second operation example. As shown in <Before Selection> in FIG. 9, the model selection screen P15 displays a message prompting the user to select whether they want to use the initial settings for the "old model" or the "new model," as well as check boxes for selecting each model. Thus, the user is able to know the available models by looking at the model selection screen P15.

### <Step S23>

Returning to FIG. 8, the reception processing portion 171 then receives a selection operation by the user via the operation portion 16. More specifically, as shown in <After Selection> in FIG. 9, the user selects the model they want to use while looking at the available models displayed on the model selection screen P15. Here, the user performs a selection operation to select the "old model" by checking the checkbox for the "old model" that the user wants to use.

### <Step S24>

Returning to FIG. 8, the activation processing portion 172 then activates either the first function group or the second function group based on the selection operation received by the reception processing portion 171. In the example shown in FIG. 9, the activation processing portion 172 activates only the functions of the "old model."

### <Step S25>

Returning to FIG. 8, the activation processing portion 172 then deactivates the unselected group of functions among the plurality of functions. In the example shown in FIG. 9, the activation processing portion 172 deactivates the "new model."

Through the above-described series of processes, users can easily activate only the models they want to use and deactivate models that are not required by the user, thereby reducing the effort required to set up models.

### <Third Operation Example>

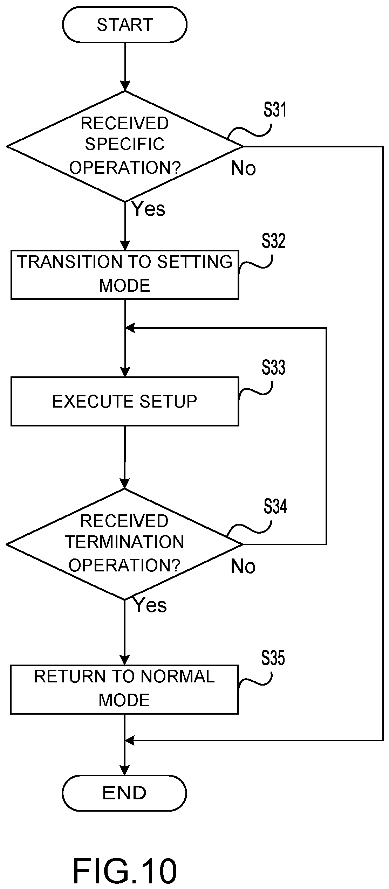

The third operation example differs from the first operation example in that it is an operation performed when a maintenance technician or a user performs setting work on the image forming apparatus 100. Hereinafter, the third operation example will be described with reference to FIG. 10. Here, steps S31, S32, and so on shown in FIG. 10 represent numbers of processing procedures (steps) executed by the image forming apparatus 100.

### <Step S31>

The transition processing portion 173 of the image forming apparatus 100 determines whether the reception processing portion 171 has received a specific operation. When the reception processing portion 171 receives a specific operation (step S31: YES), the transition processing portion 173 executes step S32. On the other hand, when the reception processing portion 171 has not received a specific operation (step S31: NO), the transition processing portion 173 maintains the mode of the main body 101 of the image forming apparatus 100 in the normal mode.

### <Step S32>

The transition processing portion 173 causes the mode of the main body 101 to transition from the normal mode to the setting mode in which the settings of the main body 101 can be changed. Thus, the maintenance technician or the user is able to temporarily perform the setting work even when the image forming apparatus 100 is in the initial setting state that satisfies the secure-by-default requirements.

### <Step S33>

The image forming apparatus 100 executes setup in accordance with the setting work performed by a maintenance technician or a user. More specifically, the image forming apparatus 100 executes setup related to a protocol such as SNMP, or setup related to a file written in WSDL, for example, in accordance with the setting work.

### <Step S34>

The transition processing portion 173 determines whether the reception processing portion 171 has received a termination operation. When the reception processing portion 171 has received the termination operation (step S34: YES), the transition processing portion 173 executes step S35. On the other hand, when the reception processing portion 171 has not received the termination operation (step S34: NO), the transition processing portion 173 maintains the mode of the main body 101 in the setting mode.

### <Step S35>

The transition processing portion 173 returns the mode of the main body 101 from the setting mode to the normal mode. Thus, it is possible for the user to use the image forming apparatus 100 in the initial setting state that satisfies the secure-by-default requirements.

### [Modification]

In the present embodiment, the plurality of components included in the image forming apparatus 100 may be distributed across a plurality of housings. For example, the reception processing portion 171, the activation processing portion 172, and the transition processing portion 173 may be provided separately.

In the present embodiment, with regard to the secure functions among the plurality of functions provided in the image forming apparatus 100, it is not enough to simply activate them, and additional settings may be required by the user or a maintenance technician, for example. To deal with such a case, the image forming apparatus 100 may be configured to allow additional settings to be made for the activated secure functions.

It is to be understood that the embodiments herein are illustrative and not restrictive, since the scope of the disclosure is defined by the appended claims rather than by the description preceding them, and all changes that fall within metes and bounds of the claims, or equivalence of such metes and bounds thereof are therefore intended to be embraced by the claims.

## Claims

1. An image forming apparatus (100), comprising:
a reception processing portion (171) capable of receiving a selection operation for selecting one or more functions from a plurality of available functions provided in a main body (101); and
an activation processing portion (172) configured to activate one or more specific functions among the plurality of functions based on the selection operation when the reception processing portion (171) receives the selection operation and deactivate the remaining functions.

2. The image forming apparatus (100) according to claim 1, wherein
the reception processing portion (171) is capable of receiving the selection operation at a specific timing when use of the main body (101) is started.

3. The image forming apparatus (100) according to claim 1 or claim 2, wherein
the plurality of functions include a function for which security settings have been made in advance.

4. The image forming apparatus (100) according to any one of claims 1 to 3,
wherein
the activation processing portion (172) activates the one or more functions as the one or more specific functions.

5. The image forming apparatus (100) according to any one of claims 1 to 3,
wherein
the activation processing portion (172) activates functions, excluding the one or more functions, from the plurality of functions as the one or more specific functions.

6. The image forming apparatus (100) according to any one of claims 1 to 5,
wherein
the plurality of functions are classified into a first function group and a second function group in which security settings are made in advance for the first function group; and
the activation processing portion (172), when the reception processing portion (171) has received a selection operation to select either the first function group or the second function group, activates the selected group and deactivates the unselected group.

7. The image forming apparatus (100) according to any one of claims 1 to 6,
wherein
the reception processing portion (171) is capable of receiving a specific operation different from the selection operation; and further comprises
a transition processing portion (173) configured to cause the main body (101) to transition to a setting mode in which settings of the main body (101) can be changed when the reception processing portion (171) receives the specific operation.

8. An image forming apparatus (100) control method, comprising:
receiving a selection operation for selecting one or more functions from a plurality of available functions provided in a main body (101) of the image forming apparatus (100); and
when the selection operation is received, activating one or more specific functions among the plurality of functions based on the selection operation and deactivating the remaining functions.
